# EUROPÄISCHE PATENTSCHRIFT

(11) **EP 1 281 875 B1**
(45) Veröffentlichungstag und Bekanntmachung des Hinweises auf die Patenterteilung: **16.02.2005**
(21) Anmeldenummer: 02405623.6
(22) Anmeldetag: 19.07.2002
(51) Int. Cl.: F16B 39/282, F16B 35/06

(54) **Schraubenkopf**
Head of screw
Tête de vis

(30) Priorität: 03.08.2001 DE 10138222
(43) Veröffentlichungstag der Anmeldung: 05.02.2003
(73) Patentinhaber: HILTI Aktiengesellschaft, 9494 Schaan (LI)
(72) Erfinder: Forster, Hubert, 82272 Moorenweis (DE); Werner, Michael, 81547 München (DE); Huber, Franz-Xaver, 82294 Günzlhofen (DE)
(74) Vertreter: Wildi, Roland

(56) Entgegenhaltungen:
- EP-A- 1 255 051
- WO-A-97/39248
- LU-A- 37 143
- US-A- 3 640 326

## Beschreibung

Die Erfindung betrifft ein Befestigungselement mit einem, zumindest teilweise ein Aussengewinde aufweisenden, Schaft und einem, an das setzrichtungsseitig abgewandte Ende anschliessenden Schraubenkopf, der an seiner setzrichtungsseitigen Unterseite mehrere sich radial im Abstand von der Längsachse des Schafts bis zum Aussenumfang der Unterseite erstreckende Stege mit einem im wesentlichen trapezförmigen Querschnitt aufweist, der durch eine setzrichtungsseitige Stirnfläche, die von zwei Seitenflächen flankiert ist, begrenzt ist.

Befestigungselemente der oben genannten Art finden nebst Anwendungen im Bauwesen in vielen Gebieten wie Fahrzeugbau, Elementebau oder dergleichen, Anwendung. An der Unterseite eines Schraubkopfes angeordnete Stege dienen zur Sicherung der Schraube gegen ungewolltes Lösen. Insbesondere bei Anwendungen bei der das Befestigungselement beispielsweise einer heftigen Vibration ausgesetzt ist, beispielsweise im Fahrzeug oder Gerätebau, verhindern die Stege ein ungewolltes Lösen der durch das Befestigungselement erzeugten Verbindung.

Aus der US3,640,326 ist ein derartiges Befestigungselement mit einem Schaft und einem, an das setzrichtungsseitig abgewandte Ende anschliessenden Schraubenkopf bekannt. An dessen setzrichtungsseitige Unterseite sind mehrere sich radial im Abstand von der Längsachse des Schafts bis zum Aussenumfang der Unterseite erstreckende Stege angeordnet. Die Stege weisen einen im wesentlichen trapezförmigen Querschnitt auf.

Vorteilhaft an dem bekannten Befestigungselement ist, dass beim Festschrauben des Befestigungsmittels an beispielsweise ein Bauteil die Stege, zumindest teilweise in die Oberfläche des Bauteils eindringen und somit eine, nebst einer reibschlüssigen auch eine teilweise formschlüssige, Verbindung zwischen dem Schraubenkopf und dem Bauteil in Schraubrichtung resultiert. Dadurch ist das Befestigungsmittel gegen ein ungewolltes Lösen gesichert.

Nachteilig an dem bekannten Befestigungsmittel ist, dass beim Festschrauben des Befestigungsmittels beispielsweise an einem Untergrund, ein sehr hohes Drehmoment auf den Schraubenkopf wirkt und dies beispielsweise ein Abdrehen des Schraubenkopfs vom Schaft zur Folge hat. Insbesondere bei einer Anwendung von beispielsweise motorisch angetriebenen Schraubgeräten besteht diese Gefahr einer zu hohen Torsion zwischen Schraubenkopf und Schaft.

Der vorliegenden Erfindung liegt die Aufgabe zugrunde, ein Befestigungselement zu schaffen, das gegen zu hohe Torsionskräfte gesichert ist. Ferner soll das Befestigungselement gegen ein ungewolltes Lösen gesichert sein.

Erfindungsgemäss wird die Aufgabe dadurch gelöst, dass der umfangsseitige Abstand der Seitenflächen zweier benachbarter Stege über deren gesamte radiale Erstreckung konstant ist.

Dadurch, dass der umfangsseitige Abstand der Seitenflächen konstant ist, erhöht sich mit zunehmender Distanz von der Längsachse des Schafts die Stirnfläche und somit die Reibfläche, da die Stirnseiten der Stege segmentartig ausgebildet sind. Durch Variieren der Gesamtfläche aller an der Unterseite angeordneten Stege ist die Auslegung des maximalen Anzugsdrehmoments definierbar. Insbesondere bei einer Anwendung von motorisch angetriebenen Schraubgeräten ist somit eine Sicherheitsvorrichtung geschaffen, die ein Abdrehen des Schraubenkopfs vom Schaft verhindert. Ferner ist es beispielsweise möglich für Schrauben für unterschiedliche Untergründe, wie beispielsweise Beton, Holz oder Plastik, die Stimseite der Stege unterschiedlich gross und unterschiedlich strukturiert auszubilden und damit beispielsweise auch ein Überdrehen des Schaftes in einem Bohrloch und damit eine Zerstörung der Verbindung zu verhindern.

Vorteilhafterweise weisen die Stege am Aussenumfang eine sich in Umfangsrichtung erstreckende Breite auf, die etwa dem umfangsseitigen Abstand der Seitenflächen zweier benachbarter Stege entspricht, um eine grosse Stirnfläche der Stege zu schaffen, was beim Festschrauben des Befestigungselements in beispielsweise ein Bauteil, eine höhere Reibung zwischen dem Schraubenkopf, insbesondere den Stegen an der Unterseite des Schraubenkopfs, mit einer Oberfläche eines Bauteils zur Folge hat.

Vorzugsweise schliessen die zwei korrespondierenden Seitenflächen eines Steges einen Basiswinkel von etwa 90° ein, um ein optimales Eindringen in die Oberfläche sicherzustellen.

Vorteilhafterweise verläuft die Stirnfläche quer zur Längsachse des Schafts, damit die Oberfläche nicht durch einen Eingriff der Stege stark beschädigt wird. Damit wird einerseits eine Zerspanung der Oberfläche verhindert und andererseits absehbare Rahmenbedingungen sichergestellt.

Die Stege weisen gegenüber der Unterseite vorzugsweise eine sich in Setzrichtung erstrekkende Höhe (h) auf, die dem 0,009- bis 0,015-fachen des Aussendurchmessers der Unterseite entspricht, um einen optimalen Reibungsverlauf zu gewährleisten.

Um ein frühzeitiges Einfressen der Stege in die Oberfläche zu verhindern sind die durch korrespondierende Seitenflächen und Stirnflächen gebildete Seitenkanten vorteilhafterweise abgerundet. Damit wird ferner verhindert, dass durch die rotierenden Stege des Schraubenkopfs unnötig Material von der Oberfläche des Bauteils abgetragen wird.

Vorzugsweise sind benachbarte Stege quer zur Längsachse um einen Winkel von 5° bis 10° gegeneinander verschwenkt angeordnet, um ein optimales Eindrehverhalten sicherzustellen.

Der Abstand entspricht in einer bevorzugten Ausführung dem 0,3- bis 0,4-fachen des Aussendurchmessers der Unterseite, um ein frühzeitiges Festrasten der Stege im Bereich des Schaftes zu verhindern, da an der Oberfläche im Bereich des Schaftes beispielweise vom Schaft abgebautes Material des Bauteils vorliegt.

Die Erfindung wird nachstehend anhand eines Ausführungsbeispieles näher erläutert. Es zeigen:
- Fig. 1: Eine Seitenansicht des Befestigungselements;
- Fig. 2: eine Aufsicht auf die Unterseite des in Fig. 1 dargestellten Schraubenkopfs;
- Fig. 3: einen vergrösserten Querschnitt durch einen Steg des in Fig. 1 dargestellten Schraubenkopfs.

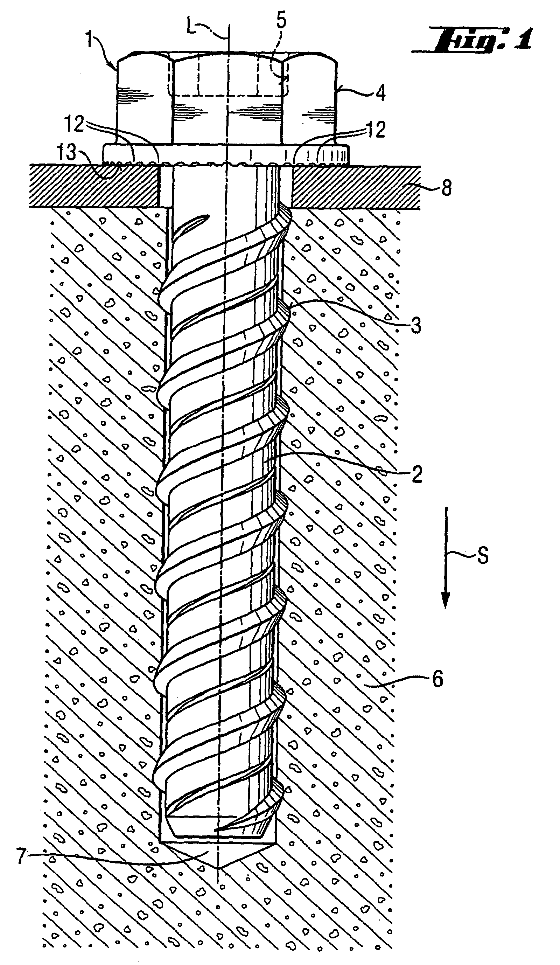

In den Fig. 1 bis 3 ist ein erfindungsgemässes Befestigungselement mit einem, zumindest teilweise ein Aussengewinde 3 aufweisenden, Schaft 2 und einem, an das setzrichtungsseitig abgewandte Ende anschliessenden Schraubenkopf 1, der als Mehrkantkopf 4 mit einem Innensechskant 5 ausgebildet ist. Das als Betonschraube ausgebildete Befestigungselement ist in einem in einen Untergrund 6 eingebrachten Bohrloch 7 gesetzt und drückt mit dem Schraubkopf 1 ein Bauteil 8 gegen den Untergrund 6, wie dies insbesondere in Fig. 1 dargestellt ist.

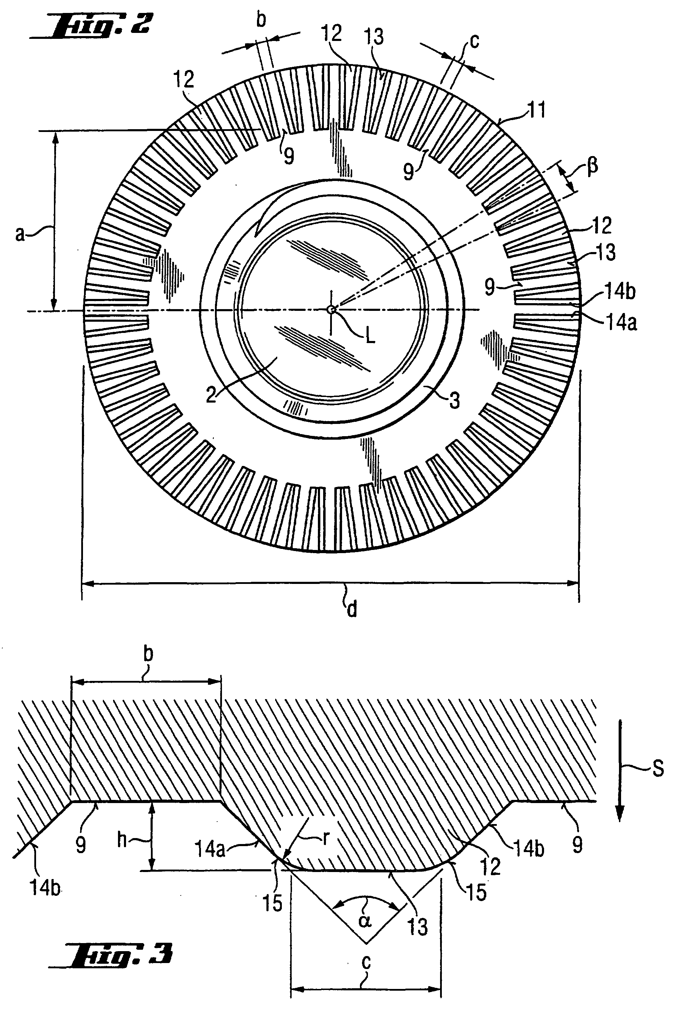

An seiner setzrichtungsseitigen Unterseite 9 weist der Schraubkopf 1 mehrere sich radial im Abstand a von der Längsachse L des Schafts 1 bis zum Aussenumfang 11 der Unterseite 9 erstreckende Stege 12 mit einem im wesentlichen trapezförmigen Querschnitt auf. Der Querschnitt der Stege 12 ist durch eine setzrichtungsseitige, quer zur Längsachse L des Schafts verlaufende Stirnfläche 13, die von zwei Seitenflächen 14a, 14b flankiert ist, begrenzt, wie dies insbesondere aus Fig. 3 ersichtlich ist. Der umfangsseitige Abstand (b) der Seitenflächen zweier benachbarter Stege über deren gesamte radiale Erstreckung ist konstant. Die zwei korrespondierenden Seitenflächen 14a, 14b eines Steges 12 schliessen einen Basiswinkel α von 90° ein. Die Stege 12 weisen gegenüber der Unterseite 9 eine sich in Setzrichtung S erstreckende Höhe h auf, die dem 0,011-fachen des Aussendurchmessers d der Unterseite 9 entspricht. Ferner sind die durch korrespondierenden Seitenflächen 14a, 14b und Stirnflächen 13 gebildeten Seitenkanten 15 mit einem Krümmungsradius r abgerundet, wobei der Krümmungsradius dem 0,017-fachen des Aussendurchmessers d entspricht. Benachbarte Stege 12 sind quer zur Längsachse L um einen Winkel β von 7,5° gegeneinander verschwenkt angeordnet. Ausserdem entspricht der Abstand a dem 0,3- bis 0,4-fachen des Aussendurchmessers d der Unterseite 9.

## Patentansprüche

1. Befestigungselement mit einem, zumindest teilweise ein Aussengewinde (3) aufweisenden, Schaft (2) und einem, an das setzrichtungsseitig abgewandte Ende anschliessenden Schraubenkopf (1), der an seiner setzrichtungsseitigen Unterseite (9) mehrere sich radial im Abstand (a) von der Längsachse (L) des Schafts (2) bis zum Aussenumfang (11) der Unterseite (9) erstreckende Stege (12) mit einem im wesentlichen trapezförmigen Querschnitt aufweist, der durch eine setzrichtungsseitige Stirnfläche (13), die von zwei Seitenflächen (14a, 14b) flankiert ist, begrenzt ist, **dadurch gekennzeichnet, dass** der umfangsseitige Abstand (b) der Seitenflächen (14a, 14b) zweier benachbarter Stege (12) über deren gesamte radiale Erstreckung konstant ist.

2. Befestigungselement nach Anspruch 1, **dadurch gekennzeichnet, dass** die Stege (12) am Aussenumfang (11) eine sich in Umfangsrichtung erstreckende Breite (c) aufweisen, die etwa dem umfangsseitigen Abstand (b) der Seitenflächen (14a, 14b) zweier benachbarter Stege (12) entspricht.

3. Befestigungselement nach Anspruch 1 oder 2, **dadurch gekennzeichnet, dass** die zwei korrespondierenden Seitenflächen (14a, 14b) eines Steges (12) einen Basiswinkel (α) von etwa 90° einschliessen.

4. Befestigungselement nach einem der Ansprüche 1 bis 3, **dadurch gekennzeichnet, dass** die Stirnfläche (13) quer zur Längsachse (L) des Schafts (2) verläuft.

5. Befestigungselement nach einem der Ansprüche 1 bis 4, **dadurch gekennzeichnet, dass** die Stege (12) gegenüber der Unterseite (9) eine sich in Setzrichtung (S) erstreckende Höhe (h) aufweisen, die dem 0,009- bis 0,015-fachen des Aussendurchmessers (d) der Unterseite (9) entspricht.

6. Befestigungselement nach einem der Ansprüche 1 bis 5, **dadurch gekennzeichnet, dass** die durch korrespondierende Seitenflächen (14a, 14b) und Stirnflächen (13) gebildeten Seitenkanten (15) abgerundet sind.

7. Befestigungselement nach einem der Ansprüche 1 bis 6, **dadurch gekennzeichnet, dass** benachbarte Stege (12) quer zur Längsachse (L) um einen Winkel (β) von 5° bis 10° gegeneinander geneigt angeordnet sind .

8. Befestigungselement nach einem der Ansprüche 1 bis 7, **dadurch gekennzeichnet, dass** der Abstand (a) dem 0,3- bis 0,4-fachen des Aussendurchmessers (d) der Unterseite (9) entspricht.

## Claims

1. A fastening element having a shank (2), provided at least in part with an external screw thread (3), and a screw head (1) adjoining the end facing away from the setting direction and having on its underside (9) facing in setting direction a plurality of webs (12) which extend in radial direction at a distance (a) from the longitudinal axis (L) of the shank (2) to the outer circumference (11) of the underside (9) and have a substantially trapezoidal cross-section delimited by an end face (13) facing in setting direction which is flanked by two lateral faces (14a, 14b), **characterized in that** the circumferential distance (b) between the lateral faces (14a, 14b) of two adjacent webs (12) is constant over their full radial extension.

2. A fastening element according to Claim 1, **characterized in that** the webs (12) at the outer circumference (11) have a width (c) extending in circumferential direction which corresponds approximately to the circumferential distance (b) between the lateral faces (14a, 14b) of two adjacent webs (12).

3. A fastening element according to Claim 1 or 2, **characterized in that** the two corresponding lateral faces (14a, 14b) of a web (12) form a base angle (α) of approximately 90°.

4. A fastening element according to one of Claims 1 to 3, **characterized in that** the end face (13) extends perpendicular to the longitudinal axis (L) of the shank (2).

5. A fastening element according to one of Claims 1 to 4, **characterized in that** the webs (12) have a height (h), extending in setting direction (S) from the underside (9), which corresponds to 0.009 to 0.015 times the outer diameter (d) of the underside (9).

6. A fastening element according to one of Claims 1 to 5, **characterized in that** the lateral edges (15) formed by corresponding lateral faces (14a, 14b) and end faces (13) are rounded off.

7. A fastening element according to one of Claims 1 to 6, **characterized in that** adjacent webs (12) are disposed perpendicular to the longitudinal axis (L) and inclined relative to one another at an angle (β) of 5° to 10°.

8. A fastening element according to one of Claims 1 to 7, **characterized in that** the distance (a) corresponds to 0.3 to 0.4 times the outer diameter (d) of the underside (9).

## Revendications

1. Élément de fixation avec une tige (2) pourvue au moins partiellement d'un filetage extérieur (3) et avec une tête de vis (1) qui se raccorde à l'extrémité opposée au côté direction de scellement et qui, sur sa sous-face côté direction de scellement (9), comporte plusieurs nervures (12) qui s'étendent radialement à une distance (a) de l'axe longitudinal (L) de la tige (2) jusqu'à la périphérie extérieure (11) de la sous-face (9) et qui présentent une section transversale sensiblement trapézoïdale délimitée par une face frontale côté direction de scellement (13) qui est flanquée de deux surfaces latérales (14a, 14b), **caractérisé en ce que** l'écartement en périphérie (b) des surfaces latérales (14a, 14b) de deux nervures voisines (12) est constant sur la totalité de leur extension radiale.

2. Élément de fixation selon la revendication 1, **caractérisé en ce que** les nervures (12) sur la périphérie extérieure (11) présentent, dans la direction circonférentielle, une largeur (c) qui correspond à peu près à l'écartement en périphérie (b) des surfaces latérales (14a, 14b) de deux nervures voisines (12).

3. Élément de fixation selon la revendication 1 ou 2, **caractérisé en ce que** les deux surfaces latérales correspondantes (14a, 14b) d'une nervure (12) forment entre elles un angle de base (α) d'environ 90°.

4. Élément de fixation selon une des revendications 1 à 3, **caractérisé en ce que** la face frontale (13) s'étend transversalement à l'axe longitudinal (L) de la tige (2).

5. Élément de fixation selon une des revendications 1 à 4, **caractérisé en ce que**, par rapport à la sous-face (9), les nervures (12) présentent, dans la direction de scellement (S), une hauteur (h) correspondant à 0,009 à 0,015 fois le diamètre extérieur (d) de la sous-face (9).

6. Élément de fixation selon une des revendications 1 à 5, **caractérisé en ce que** les arêtes latérales (15) formées par des surfaces latérales correspondantes (14a, 14b) et des faces frontales (13) sont arrondies.

7. Élément de fixation selon une des revendications 1 à 6, **caractérisé en ce que**, transversalement à l'axe longitudinal (L), des nervures voisines (12) sont disposées avec une inclinaison mutuelle correspondant à un angle (β) de 5° à 10°.

8. Élément de fixation selon une des revendications 1 à 7, **caractérisé en ce que** l'écartement (a) correspond à 0,3 à 0,4 fois le diamètre extérieur (d) de la sous-face (9).
